# EUROPEAN PATENT APPLICATION

(11) **EP 4 328 249 A1**
(43) Date of publication of application: **28.02.2024**
(21) Application number: 22816061.0
(22) Date of filing: 30.05.2022
(51) Int. Cl.: C08F 232/08, B60C 1/00, C08L 9/00, C08L 45/00

(54) **PETROLEUM RESIN, ADDITIVE FOR RUBBER, UNCROSSLINKED RUBBER COMPOSITION, AND CROSSLINKED RUBBER**

(30) Priority: 01.06.2021 JP 2021092341
(71) Applicant: ENEOS Corporation, Chiyoda-ku Tokyo 100-8162 (JP)
(72) Inventor: KAWASAKI Hiroshi, Tokyo 100-8162 (JP); KOBORI Shimon, Tokyo 100-8162 (JP); KOBAYASHI Yasuhiro, Tokyo 100-8162 (JP); UCHIZAWA Shotaro, Tokyo 100-8162 (JP); UEDA Naho, Tokyo 100-8162 (JP); AKIYAMA Yoichi, Tokyo 100-8162 (JP); CHINO Keisuke, Tokyo 100-8162 (JP)
(74) Representative: Grünecker Patent- und Rechtsanwälte PartG mbB
(86) International application number: PCT/JP2022/021977
(87) International publication number: WO 2022/255314

(57) **Abstract**

a petroleum resin that is a polymer of a raw material component including a C9 fraction containing an aromatic olefin and dicyclopentadiene, in which a ratio C₂/C₁ (mass ratio) of a content C₂ of the aromatic olefin to a content C₁ of the dicyclopentadiene in the raw material component is 0.35 or more and 0.5 or less, and a softening point is 150°C or higher.

## Description

### Technical Field

The present invention relates to a petroleum resin, an additive for rubber, an uncrosslinked rubber composition, and a crosslinked rubber.

### Background Art

Hitherto, additives for rubber have been in use to impart a variety of characteristics to rubber materials. For example, Patent Literature 1 discloses a composition for a tire thread containing at least one elastomer and a specific hydrocarbon polymer additive based on dicyclopentadiene, cyclopentadiene and methylcyclopentadiene.

### Citation List

### Patent Literature

[Patent Literature 1] Japanese Translation of PCT International Application Publication No. 2015-523430

### Summary of Invention

### Technical Problem

Tires are one main application of rubber materials. Examples of characteristics required for rubber materials for tires include cut resistance and chipping resistance in large tires.

An objective of the present invention is to provide a petroleum resin capable of imparting excellent cut resistance and chipping resistance to isoprene-based rubber. In addition, an objective of the present invention is to provide an additive for rubber, an uncrosslinked rubber composition and a crosslinked rubber each containing the petroleum resin. In addition, an objective of the present invention is to provide a method for producing the petroleum resin. Furthermore, an objective of the present invention is to provide an additive for thread rubber capable of imparting excellent cut resistance and chipping resistance to isoprene-based rubber, an uncrosslinked rubber composition for forming thread rubber containing the additive and a thread rubber formed by crosslinking the uncrosslinked rubber composition.

### Solution to Problem

An aspect of the present invention relates to a petroleum resin that is a polymer of a raw material component including a C9 fraction containing an aromatic olefin and dicyclopentadiene, in which a ratio C₂/C₁ (mass ratio) of a content C₂ of the aromatic olefin to a content C₁ of the dicyclopentadiene in the raw material component is 0.35 or more and 0.5 or less, and a softening point is 150°C or higher.

Another aspect of the present invention relates to an additive for rubber containing the petroleum resin.

The additive for rubber according to the aspect may be an additive for isoprene-based rubber.

The additive for rubber according to the aspect may be an additive for natural rubber.

Still another aspect of the present invention relates to an uncrosslinked rubber composition containing a rubber component containing isoprene-based rubber, a crosslinking agent for rubber and the petroleum resin.

Yet still another aspect of the present invention relates to a crosslinked rubber that is formed by crosslinking the uncrosslinked rubber composition.

Far still another aspect of the present invention relates to a method for producing a petroleum resin including a first step of thermally polymerizing a raw material component including a C9 fraction containing an aromatic olefin and dicyclopentadiene to obtain a thermal polymer having a lower softening point than the petroleum resin and a second step of heating the thermal polymer to obtain a petroleum resin. In this production method, the ratio C₂/C₁ (mass ratio) of the content C₂ of the aromatic olefin to the content C₁ of the dicyclopentadiene in the raw material component may be 0.35 or more and 0.5 or less, and the softening point of the petroleum resin may be 150°C or higher.

Far still another aspect of the present invention relates to an additive for thread rubber containing a petroleum resin, in which the petroleum resin is a thermal polymer of a raw material component including a C9 fraction containing an aromatic olefin and dicyclopentadiene, and a softening point of the petroleum resin is 150°C or higher.

The additive for thread rubber according to an aspect may be an additive for thread rubber for a large tire.

Far still another aspect of the present invention relates to an uncrosslinked rubber composition for forming thread rubber containing a rubber component containing isoprene-based rubber, a crosslinking agent for rubber and the additive for thread rubber.

Far still another aspect of the present invention relates to a thread rubber that is formed by crosslinking the uncrosslinked rubber composition for a thread.

### Advantageous Effects of Invention

According to the present invention, a petroleum resin capable of imparting excellent cut resistance and chipping resistance to isoprene-based rubber is provided. In addition, according to the present invention, an additive for rubber, an uncrosslinked rubber composition and a crosslinked rubber each containing the petroleum resin are provided. In addition, according to the present invention, a method for producing the petroleum resin is provided. Furthermore, according to the present invention, an additive for thread rubber capable of imparting excellent cut resistance and chipping resistance to isoprene-based rubber, an uncrosslinked rubber composition for forming thread rubber containing the additive and a thread rubber formed by crosslinking the uncrosslinked rubber composition are provided.

### Description of Embodiments

Hereinafter, a preferable embodiment of the present invention will be described in detail.

### (Petroleum resin)

A petroleum resin of the present embodiment is a polymer of a raw material component including a C9 fraction containing an aromatic olefin and dicyclopentadiene. The softening point of the petroleum resin of the present embodiment is 150°C or higher. A method for polymerizing the raw material component is not particularly limited, may be, for example, thermal polymerization, cationic polymerization or the like and is, among these, particularly preferably thermal polymerization.

In addition, in a preferable aspect, the ratio C₂/C₁ (mass ratio) of the content C₂ of the aromatic olefin to the content C₁ of the dicyclopentadiene in the raw material component is 0.35 or more and 0.5 or less.

The petroleum resin of the present embodiment is capable of imparting excellent cut resistance and chipping resistance to isoprene-based rubber. Therefore, the petroleum resin of the present embodiment can be preferably used as an additive for rubber, particularly, an additive for isoprene-based rubber.

Cut resistance and chipping resistance are evaluated by the tear strength of crosslinked rubber, and, as the tear strength becomes higher, cut resistance and chipping resistance become superior. That is, the petroleum resin of the present embodiment can also be said to be an additive for rubber capable of forming crosslinked rubber having an excellent tear strength by being blended into isoprene-based rubber.

Cut resistance and chipping resistance are performances that are valued for rubber that is used in the thread parts of tires (thread rubber). In addition, cut resistance and chipping resistance are performances that are particularly valued for tires that are used in agricultural vehicles, heavy load vehicles and construction vehicles that are used in harsh environments and large vehicles (for example, trucks, buses and the like) to which a high load is applied, that is, large tires. Therefore, the petroleum resin of the present embodiment can be preferably used as an additive for thread rubber, particularly, an additive for thread rubber for large tires.

Ordinarily, for petroleum resins having a high softening point, the molecular amount distribution becomes large, and, accordingly, the iodine value tends to become high. In the petroleum resin of the present embodiment, it is possible to satisfy both a low iodine value and a high softening point by setting the ratio C₂/C₁ within a specific range. Such a petroleum resin tends to be capable of imparting excellent cut resistance and chipping resistance to isoprene-based rubber.

The iodine value of the petroleum resin of the present embodiment may be, for example, 180 or lower and is preferably 175 or less and more preferably 160 or lower. In such a case, there is a tendency that a crosslinking structure with a rubber component is appropriately formed at the time of the vulcanization of an uncrosslinked rubber composition, which makes it easy to obtain crosslinked rubber having more preferable properties for tire applications.

The lower limit of the iodine value of the petroleum resin of the present embodiment is not particularly limited. The iodine value of the petroleum resin of the present embodiment may be, for example, 50 or higher and is preferably 100 or higher and more preferably 125 or higher. In such a case, there is a tendency that it becomes easy to form a crosslinking structure with a rubber component at the time of the vulcanization of an uncrosslinked rubber composition and it becomes easy to obtain crosslinked rubber having more preferable properties for tire applications. That is, the iodine value of the petroleum resin of the present embodiment may be, for example, 50 to 180, 50 to 175, 50 to 160, 100 to 180, 100 to 175, 100 to 160, 125 to 180, 125 to 175 or 125 to 160.

In the present specification, the iodine value of the petroleum resin indicates a value that is measured based on JIS K 0070: 1992.

The softening point of the petroleum resin of the present embodiment is 150°C or higher, preferably 155°C or higher and more preferably 160°C or higher and may be 165°C or higher. When the softening point of the petroleum resin is high, there is a tendency that it is possible to impart superior cut resistance and chipping resistance to isoprene-based rubber.

The upper limit of the softening point of the petroleum resin of the present embodiment is not particularly limited. The softening point of the petroleum resin of the present embodiment may be, for example, 220°C or lower and is preferably 200°C or lower and more preferably 190°C or lower. In such a case, there is a tendency that kneading with a rubber component becomes easier. That is, the softening point of the petroleum resin of the present embodiment may be 150°C to 220°C, 150°C to 200°C, 150°C to 190°C, 155°C to 220°C, 155°C to 200°C, 155°C to 190°C, 160°C to 220°C, 160°C to 200°C, 160°C to 190°C, 165°C to 220°C, 165°C to 200°C or 165°C to 190°C.

In the present specification, the softening point of the petroleum resin indicates a value that is measured by a method based on ASTM D6090 using DP70 manufactured by Mettler Toledo.

The number-average molecular weight (Mn) of the petroleum resin of the present embodiment is not particularly limited, may be, for example, 500 or higher and is preferably 600 or higher. In addition, the number-average molecular weight (Mn) of the petroleum resin of the present embodiment is, for example, 1000 or lower and more preferably 900 or lower. That is, the number-average molecular weight (Mn) of the petroleum resin of the present embodiment is, for example, 500 to 1000, 500 to 900, 600 to 1000 or 600 to 900.

The weight-average molecular weight (Mw) of the petroleum resin of the present embodiment is not particularly limited, may be, for example, 1500 or higher and is preferably 1800 or higher. In addition, the weight-average molecular weight (Mw) of the petroleum resin of the present embodiment is, for example, 2500 or lower, more preferably 2300 or lower and still more preferably 2000 or lower. That is, the weight-average molecular weight (Mw) of the petroleum resin of the present embodiment is, for example, 1500 to 2500, 1500 to 2300, 1500 to 2000, 1800 to 2500, 1800 to 2300 or 1800 to 2000.

The molecular weight distribution (Mw/Mn) of the petroleum resin of the present embodiment is not particularly limited, may be, for example, 2.5 or more and is preferably 2.7 or more. In such a case, the iodine value is likely to become the above-described preferable lower limit value or higher. In addition, the molecular weight distribution (Mw/Mn) of the petroleum resin of the present embodiment is, for example, 3.2 or less and more preferably 3.0 or less. In such a case, the iodine value is likely to become the above-described preferable upper limit value or lower. That is, the molecular weight distribution (Mw/Mn) of the petroleum resin of the present embodiment is, for example, 2.5 to 3.2, 2.5 to 3.0, 2.7 to 3.2 or 2.7 to 3.0.

In the present specification, the number-average molecular weight, weight-average molecular weight, Z-average molecular weight and molecular weight distribution of the petroleum resin indicate standard polystyrene-equivalent values that are measured by gel permeation chromatography (GPC).

The petroleum resin of the present embodiment may be, for example, a resin obtained by the addition polymerization of the thermal polymer of the raw material component (for example, a thermal polymer (A) to be described below). In this case, the petroleum resin of the present embodiment can also be said to be an addition polymer of the thermal polymer of the raw material component.

The raw material component contains a C9 fraction containing an aromatic olefin and dicyclopentadiene, and the ratio C₂/C₁ of the content C₂ of the aromatic olefin to the content C₁ of the dicyclopentadiene in the raw material component is preferably 0.35 or more and 0.5 or less in terms of the mass ratio.

The C9 fraction may be, for example, a C9 fraction obtained by the thermal decomposition of a petroleum-derived raw material oil (for example, petroleum naphtha). The C9 fraction is ordinarily a fraction having a boiling point within a range of approximately 100°C to 280°C and mainly contains a compound having 8 to 10 carbon atoms.

The C9 fraction includes an aromatic olefin. Examples of the aromatic olefin in the C9 fraction include vinyltoluene, methylstyrene, indene, styrene, methylindene and the like.

The C9 fraction may further contain a component other than the aromatic olefin. The C9 fraction may further contain, for example, alkylbenzenes such as propylbenzene, methyl ethyl benzene and indane, a saturated hydrocarbon such as naphthene or paraffin or the like.

The proportion of the aromatic olefin in the C9 fraction is not particularly limited. The proportion of the aromatic olefin in the C9 fraction may be, for example, 40 mass% or more and is preferably 50 mass% or more and more preferably 65 mass% or more. In addition, the proportion of the aromatic olefin in the C9 fraction may be, for example, 99 mass% or less, 95 mass% or less, 90 mass% or less, 85 mass% or less or 80 mass% or less. That is, the proportion of the aromatic olefin in the C9 fraction may be, for example, 40 to 99 mass%, 40 to 95 mass%, 40 to 90 mass%, 40 to 85 mass%, 40 to 80 mass%, 50 to 99 mass%, 50 to 95 mass%, 50 to 90 mass%, 50 to 85 mass%, 50 to 80 mass%, 65 to 99 mass%, 65 to 95 mass%, 65 to 90 mass%, 65 to 85 mass% or 65 to 80 mass%.

A component other than the aromatic olefin in the C9 fraction functions as, for example, a diluting agent in thermal polymerization. The proportion of the component other than the aromatic olefin in the C9 fraction may be, for example, 60 mass% or less, 50 mass% or less, 45 mass% or less, 40 mass% or less or 35 mass% or less. In addition, the proportion of the component other than the aromatic olefin in the C9 fraction may be, for example, 1 mass% or more, 5 mass% or more, 10 mass% or more, 15 mass% or more or 20 mass% or more. That is, the proportion of the component other than the aromatic olefin in the C9 fraction may be, for example, 1 to 60 mass%, 1 to 50 mass%, 1 to 45 mass%, 1 to 40 mass%, 1 to 35 mass%, 5 to 60 mass%, 5 to 50 mass%, 5 to 45 mass%, 5 to 40 mass%, 5 to 35 mass%, 10 to 60 mass%, 10 to 50 mass%, 10 to 45 mass%, 10 to 40 mass%, 10 to 35 mass%, 15 to 60 mass%, 15 to 50 mass%, 15 to 45 mass%, 15 to 40 mass%, 15 to 35 mass%, 20 to 60 mass%, 20 to 50 mass%, 20 to 45 mass%, 20 to 40 mass% or 20 to 35 mass%.

The ratio C₂/C₁ is preferably 0.35 or more, more preferably 0.37 or more and still more preferably 0.40 or more. In such a case, there is a possibility that it is possible to impart excellent cut resistance and chipping resistance to isoprene-based rubber while maintaining a lower iodine value.

The ratio C₂/C₁ is preferably 0.5 or less, more preferably 0.48 or less and still more preferably 0.46 or less. In such a case, the reactivity during polymerization further improves, and it becomes easy to obtain a petroleum resin of a preferable aspect. That is, the C₂/C₁ may be 0.35 to 0.5, 0.35 to 0.48, 0.35 to 0.46, 0.37 to 0.5, 0.37 to 0.48, 0.37 to 0.46, 0.40 to 0.5, 0.40 to 0.48 or 0.40 to 0.46.

The dicyclopentadiene can be obtained by, for example, dimerizing cyclopentadiene that is included in a C5 fraction obtained by the thermal decomposition of a petroleum-derived raw material oil (for example, petroleum naphtha) into dicyclopentadiene and separating the dicyclopentadiene from other components in the C5 fraction. The C5 fraction is ordinarily a fraction having a boiling point within a range of approximately 20°C to 110°C and mainly contains a compound having four or five carbon atoms.

The raw material component may include, aside from the dicyclopentadiene (a dimer of the cyclopentadiene), an alkyl substitution product thereof (for example, methyldicyclopentadiene), a polymer of the cyclopentadiene (for example, tricyclpentadiene) or the like.

The petroleum resin of the present embodiment can be produced by, for example, the following production method.

A method for producing a petroleum resin according to an aspect includes a first step of thermally polymerizing a raw material component to obtain a thermal polymer having a lower softening point than the petroleum resin and a second step of heating the thermal polymer to obtain a petroleum resin.

In the first step, a method for the thermal polymerization is not particularly limited, and, for example, the raw material component may be heated to a predetermined reaction temperature or higher.

The reaction temperature of the thermal polymerization is not particularly limited, may be, for example, 250°C or higher and is preferably 260°C or higher and more preferably 270°C or higher. In addition, the reaction temperature of the thermal polymerization may be, for example, 300°C or lower and is preferably 290°C or lower. That is, the reaction temperature of the thermal polymerization may be, for example, 250°C to 300°C, 250°C to 290°C, 260°C to 300°C, 260°C to 290°C, 270°C to 300°C or 270°C to 290°C.

The reaction time (a time during which a reaction system is maintained at the reaction temperature) of the thermal polymerization is not particularly limited, may be, for example, 100 minutes or longer or may be 130 minutes or longer or 160 minutes or longer. In addition, the reaction time of the thermal polymerization may be, for example, 300 minutes or shorter or may be 250 minutes or shorter or 200 minutes or shorter. That is, the reaction time of the thermal polymerization may be, for example, 100 to 300 minutes, 100 to 250 minutes, 100 to 200 minutes, 130 to 300 minutes, 130 to 250 minutes, 130 to 200 minutes, 160 to 300 minutes, 160 to 250 minutes or 160 to 200 minutes.

The reaction system of the thermal polymerization may further contain a different component other than the raw material component. For example, the reaction system of the thermal polymerization may further contain a solvent. As the solvent, it is possible to use, for example, a saturated hydrocarbon (alkane, cycloalkane or the like), an aromatic hydrocarbon (benzene, toluene or the like) or the like.

In the first step, the thermal polymer may be obtained by, for example, removing an unreacted component (for example, the component other than the aromatic olefin in the C9 fraction, an unreacted aromatic olefin, the solvent or the like) from a reaction product obtained by the thermal polymerization. The unreacted component may be removed by, for example, distillation or the like.

The thermal polymer that is obtained by the first step (hereinafter, the thermal polymer (A)) has a lower softening point than the above-described petroleum resin.

The softening point of the thermal polymer (A) needs to be lower than the softening point of the petroleum resin and may be, for example, lower than 165°C, lower than 160°C, lower than 155°C or lower than 150°C or may be 145°C or lower.

The softening point of the thermal polymer (A) is not particularly limited, but the softening point of the thermal polymer (A) may be, for example, 120°C or higher and is preferably 140°C or higher from the viewpoint of easily obtaining a petroleum resin having the above-described preferable softening point. That is, the softening point of the thermal polymer (A) may be, for example, 120°C or higher and lower than 165°C, 120°C or higher and lower than 160°C, 120°C or higher and lower than 155°C, 120°C or higher and lower than 150°C, 120°C or higher and lower than 145°C, 140°C or higher and lower than 165°C, 140°C or higher and lower than 160°C, 140°C or higher and lower than 155°C, 140°C or higher and lower than 150°C or 140°C or higher and lower than 145°C.

In the present specification, the softening point of the thermal polymer (A) indicates a value that is measured by a method based on ASTM D6090 using DP70 manufactured by Mettler Toledo.

The iodine value of the thermal polymer (A) may be, for example, 180 or lower and is preferably 175 or lower and more preferably 160 or lower. In such a case, it becomes easy to obtain a petroleum resin having the above-described preferable iodine value.

The iodine value of the thermal polymer (A) may be, for example, 50 or higher and is preferably 100 or higher and more preferably 125 or higher. In such a case, it becomes easy to obtain a petroleum resin having the above-described preferable iodine value. That is, the iodine value of the thermal polymer (A) is, for example, 50 to 180, 50 to 175, 50 to 160, 100 to 180, 100 to 175, 100 to 160, 125 to 180, 125 to 175 or 125 to 160.

In the present specification, the iodine value of the thermal polymer (A) indicates a value that is measured based on JIS K 0070: 1992.

The number-average molecular weight (Mn) of the thermal polymer (A) is not particularly limited, may be, for example, 400 or higher and is preferably 500 or higher. In addition, the number-average molecular weight (Mn) of the thermal polymer (A) is, for example, 1000 or lower and more preferably 900 or lower. In such a case, it becomes easy to obtain a petroleum resin having the above-described preferable number-average molecular weight (Mn). That is, the number-average molecular weight (Mn) of the thermal polymer (A) is, for example, 400 to 1000, 400 to 900, 500 to 1000 or 500 to 900.

The weight-average molecular weight (Mw) of the thermal polymer (A) is not particularly limited, may be, for example, 1000 or higher and is preferably 1200 or higher. In addition, the weight-average molecular weight (Mw) of the thermal polymer (A) is, for example, 1800 or lower and more preferably 1600 or lower. In such a case, it becomes easy to obtain a petroleum resin having the above-described preferable weight-average molecular weight (Mw). That is, the weight-average molecular weight (Mw) of the thermal polymer (A) is, for example, 1000 to 1800, 1000 to 1600, 1200 to 1800 or 1200 to 1600.

The number-average molecular weight (Mn) of the petroleum resin of the present embodiment is not particularly limited, may be, for example, 500 or higher and is preferably 600 or higher. In addition, the number-average molecular weight (Mn) of the petroleum resin of the present embodiment is, for example, 1000 or lower and more preferably 900 or lower. That is, the number-average molecular weight (Mn) of the petroleum resin of the present embodiment is, for example, 500 to 1000, 500 to 900, 600 to 1000 or 600 to 900.

The weight-average molecular weight (Mw) of the petroleum resin of the present embodiment is not particularly limited, may be, for example, 1500 or higher and is preferably 1800 or higher. In addition, the weight-average molecular weight (Mw) of the petroleum resin of the present embodiment is, for example, 2500 or lower, more preferably 2300 or lower and still more preferably 2000 or lower. That is, the weight-average molecular weight (Mw) of the petroleum resin of the present embodiment is, for example, 1500 to 2500, 1500 to 2300, 1500 to 2000, 1800 to 2500, 1800 to 2300 or 1800 to 2000.

The molecular weight distribution (Mw/Mn) of the thermal polymer (A) is not particularly limited, may be, for example, 1.8 or more and is preferably 2.0 or more. In addition, the molecular weight distribution (Mw/Mn) of the thermal polymer (A) is, for example, 3.0 or less and more preferably 2.8 or less. In such a case, it becomes easy to obtain a petroleum resin having the above-described preferable molecular weight distribution (Mw/Mn). That is, the molecular weight distribution (Mw/Mn) of the thermal polymer (A) is, for example, 1.8 to 3.0, 1.8 to 2.8, 2.0 to 3.0 or 2.0 to 2.8.

In the present specification, the number-average molecular weight, weight-average molecular weight, Z-average molecular weight and molecular weight distribution of the thermal polymer (A) indicate standard polystyrene-equivalent values that are measured by gel permeation chromatography (GPC).

The second step is step of heating the thermal polymer (A) to perform addition polymerization and obtain a petroleum resin.

In the second step, a method for the addition polymerization is not particularly limited, and, for example, the raw material component may be heated to a predetermined reaction temperature or higher.

The reaction temperature of the addition polymerization is not particularly limited, may be, for example, 220°C or higher and is preferably 230°C or higher and more preferably 240°C or higher. In addition, the reaction temperature of the addition polymerization may be, for example, 280°C or lower and is preferably 270°C or lower and more preferably 260°C or lower. That is, the reaction temperature of the addition polymerization may be, for example, 220°C to 280°C, 220°C to 270°C, 220°C to 260°C, 230°C to 280°C, 230°C to 270°C, 230°C to 260°C, 240°C to 280°C, 240°C to 270°C or 240°C to 260°C.

The reaction time (a time during which a reaction system is maintained at the reaction temperature) of the addition polymerization is not particularly limited, may be, for example, three hours or longer or may be four hours or longer or five hours or longer. In addition, the reaction time of the addition polymerization may be, for example, eight hours or shorter or may be seven hours or shorter or six hours or shorter. That is, the reaction time of the addition polymerization may be, for example, three to eight hours, three to seven hours, three to six hours, four to eight hours, four to seven hours, four to six hours, five to eight hours, five to seven hours or five to six hours.

The addition polymerization is preferably performed in, for example, an inert gas atmosphere. The inert gas is not particularly limited, and examples thereof include nitrogen, argon and the like.

The addition polymerization may be performed in the presence of a solvent or may be performed in the absence of a solvent, but is preferably performed in the absence of a solvent.

The addition polymerization may be performed under atmospheric pressure or in a sealed system and may be performed under a reduced-pressure environment.

In the second step, a petroleum resin having higher molecular weights (number-average molecular weight and weight-average molecular weight) and a higher softening point than the thermal polymer (A) is obtained by the addition polymerization. In addition, for the petroleum resin that is obtained in the second step, there is a tendency that the molecular weight distribution becomes larger than that of the thermal polymer (A). In addition, for the petroleum resin that is obtained in the second step, there is a tendency that the iodine value becomes larger than that of the thermal polymer (A). That is, the second step may be a step of obtaining a petroleum resin having a higher softening point, higher molecular weights (number-average molecular weight and weight-average molecular weight), a larger molecular weight distribution and a higher iodine value than the thermal polymer (A).

### (Additive for rubber)

An additive for rubber of the present embodiment contains the above-described petroleum resin. The additive for rubber of the present embodiment is capable of imparting excellent cut resistance and chipping resistance to rubber materials (particularly, isoprene-based rubber).

The additive for rubber of the present embodiment may be an additive composed of the petroleum resin alone or may be an additive containing the petroleum resin and a different component. As the different component, it is possible to use a well-known component as an additive for rubber with no particular limitations. Examples of the different component include each component that can be contained in an uncrosslinked rubber composition to be described below.

The amount of the additive for rubber of the present embodiment added to a rubber component is not particularly limited, but needs to be an amount at which the amount of the petroleum resin added to 100 parts by mass of the rubber component is within a preferable range to be described below.

The amount of the petroleum resin added to 100 parts by mass of the rubber component may be, for example, 1 part by mass or more and is preferably 3 parts by mass or more and more preferably 5 parts by mass. In such a case, the above-described effect is more significantly exhibited. In addition, the amount of the petroleum resin added may be, for example, 40 parts by mass or less and is preferably 30 parts by mass or less and more preferably 20 parts by mass or less with respect to 100 parts by mass of the rubber component from the viewpoint of the rubber elasticity of crosslinked rubber. That is, the amount of the petroleum resin added may be, for example, 1 to 40 parts by mass, 1 to 30 parts by mass, 1 to 20 parts by mass, 3 to 40 parts by mass, 3 to 30 parts by mass, 3 to 20 parts by mass, 5 to 40 parts by mass, 5 to 30 parts by mass or 5 to 20 parts by mass with respect to 100 parts by mass of the rubber component.

The additive for rubber of the present embodiment can be preferably used as an additive for thread rubber and can be particularly preferably used as an additive for thread rubber for large tires.

### (Uncrosslinked rubber composition)

An uncrosslinked rubber composition of the present embodiment contains a rubber component containing isoprene-based rubber, a crosslinking agent for rubber and the above-described petroleum resin. A crosslinked rubber obtained by crosslinking this uncrosslinked rubber composition is excellent in terms of cut resistance and chipping resistance and thus can be preferably used as a rubber material for a tire (particularly, a rubber material for a large tire such as a truck tire) and can be particularly preferably used as a rubber material for a tire thread (particularly, a rubber material for a thread of a large tire).

Examples of the isoprene-based rubber include natural rubber, deproteinized natural rubber, synthetic rubber and the like. Here, the deproteinized natural rubber is natural rubber on which a deproteinization treatment has been performed. Examples of the natural rubber include natural rubber latex, technically specified rubber (TSR), smoked sheet (RSS), gutta-percha, eucommia-derived natural rubber, guayule-derived natural rubber, Russian dandelion-derived natural rubber, plant component fermented rubber and the like. In addition, modified natural rubber such as epoxidized natural rubber, methacrylic acid modified natural rubber, styrene modified natural rubber, sulfonic acid modified natural rubber and zinc sulfonate modified natural rubber, which are obtained by modifying the above-described natural rubber, are also included in the natural rubber. Examples of the synthetic rubber include isoprene rubber, isoprene-butadiene rubber, halogenated isoprene rubber, styrene-isoprene-butadiene rubber and the like.

The rubber component may further contain rubber other than isoprene-based rubber. Examples of the rubber other than isoprene-based rubber include butadiene rubber (BR), nitrile rubber, silicone rubber, styrene-butadiene rubber (SBR), ethylene-propylene-diene rubber, halogenated butyl rubber, halogenated isobutylene copolymers, chloroprene rubber (CR), butyl rubber, halogenated isobutylene-p-methyl styrene rubber and the like.

The proportion of the isoprene-based rubber in the rubber component may be, for example, 50 mass% or more, is preferably 60 mass% or more, more preferably 70 mass% or more, still more preferably 80 mass% and far still more preferably 90 mass% or more from the viewpoint of more significantly obtaining the above-described effect, may be 95 mass% or more and may be 100 mass%.

As the crosslinking agent for rubber, any crosslinking agents that are normally used for the crosslinking of rubber can be used with no particular limitations. Examples of the crosslinking agent for rubber include sulfur crosslinking agents such as sulfur, morpholine disulfide and alkylphenol disulfide; organic peroxide crosslinking agents such as cyclohexanone peroxide, methyl acetoacetate peroxide, tert-butyl peroxyisobutyrate, tert-butyl peroxybenzoate, benzoyl peroxide, lauroyl peroxide, dicumyl peroxide oxide, di-tert-butyl peroxide and 1,3-bis(tert-butylperoxyisopropyl)benzene; and the like. One crosslinking agent may be used singly or two or more crosslinking agents may be used in combination.

The content of the crosslinking agent for rubber may be, for example, 0.1 parts by mass or more and is preferably 0.5 parts by mass or more and more preferably 1 part by mass or more with respect to 100 parts by mass of the rubber component. In addition, the content of the crosslinking agent for rubber may be, for example, 5 parts by mass or less and is preferably 3 parts by mass or less and more preferably 2 parts by mass or less with respect to 100 parts by mass of the rubber component. That is, the content of the crosslinking agent for rubber may be, for example, 0.1 to 5 parts by mass, 0.1 to 3 parts by mass, 0.1 to 2 parts by mass, 0.5 to 5 parts by mass, 0.5 to 3 parts by mass, 0.5 to 2 parts by mass, 1 to 5 parts by mass, 1 to 3 parts by mass or 1 to 2 parts by mass with respect to 100 parts by mass of the rubber component.

The uncrosslinked rubber composition of the present embodiment may further contain a variety of reinforcing agents, fillers, rubber extender oils, softeners, vulcanization accelerators, vulcanization aids and the like that are used in the rubber industry field. Each of the components may be used singly or two or more thereof may be used in combination.

Examples of the reinforcing agents include carbon black, silica and the like.

Carbon black can be preferably used as a reinforcing agent since such effects as improvement in the wear resistance and rolling resistance of the crosslinked rubber, prevention of cracks or fissures due to ultraviolet rays (ultraviolet degradation prevention) and the like can be obtained. The kind of the carbon black is not particularly limited, and it is possible to use well-known conventional carbon black, for example, carbon black such as furnace black, acetylene black, thermal black, channel black and graphite.

In addition, the physical characteristics, such as the particle diameters, the pore volume and the specific surface area, of the carbon black are not particularly limited, and it is possible to appropriately use a variety of carbon black that is conventionally used in the rubber industry, for example, SAF, ISAF, HAF, FEF, GPF, SRF (all are the abbreviations of carbon black classified by ASTM standard D-1765-82a of USA) and the like.

In a case where the uncrosslinked rubber composition of the present embodiment contains carbon black, the content of the carbon black may be, for example, 5 parts by mass or more and is preferably 10 parts by mass or more, more preferably 30 parts by mass or more and still more preferably 40 parts by mass or more with respect to 100 parts by mass of the rubber component. In addition, the content of the carbon black may be, for example, 100 parts by mass or less and is preferably 80 parts by mass or less, more preferably 70 parts by mass or less and still more preferably 60 parts by mass or less with respect to 100 parts by mass of the rubber component. That is, the content of the carbon black may be, for example, 0 to 100 parts by mass, 0 to 80 parts by mass, 0 to 70 parts by mass, 0 to 60 parts by mass, 5 to 100 parts by mass, 5 to 80 parts by mass, 5 to 70 parts by mass, 5 to 60 parts by mass, 10 to 100 parts by mass, 10 to 80 parts by mass, 10 to 70 parts by mass, 10 to 60 parts by mass, 30 to 100 parts by mass, 30 to 80 parts by mass, 30 to 70 parts by mass, 30 to 60 parts by mass, 40 to 100 parts by mass, 40 to 80 parts by mass, 40 to 70 parts by mass or 40 to 60 parts by mass with respect to 100 parts by mass of the rubber component.

As silica, it is possible to use silica that is conventionally used as a reinforcing agent for rubber with no particular limitations. Examples of the silica include dry method white carbon, wet method white carbon, synthetic silicate-based white carbon, colloidal silica, precipitated silica and the like. The specific surface area of the silica is not particularly limited, it is possible to normally use silica having a specific surface area within a range of 40 to 600 m²/g, preferably, 70 to 300 m²/g, and it is possible to use silica having primary particle diameters of 10 to 1000 nm.

In a case where the uncrosslinked rubber composition of the present embodiment contains silica, the content of the silica may be, for example, 5 parts by mass or more and is preferably 10 parts by mass or more, more preferably 30 parts by mass or more with respect to 100 parts by mass of the rubber component. In addition, the content of the silica may be, for example, 100 parts by mass or less and is preferably 80 parts by mass or less and more preferably 60 parts by mass or less with respect to 100 parts by mass of the rubber component. That is, the content of the silica may be, for example, 0 to 100 parts by mass, 0 to 80 parts by mass, 0 to 60 parts by mass, 5 to 100 parts by mass, 5 to 80 parts by mass, 5 to 60 parts by mass, 10 to 100 parts by mass, 10 to 80 parts by mass, 10 to 60 parts by mass, 30 to 100 parts by mass, 30 to 80 parts by mass or 30 to 60 parts by mass.

In addition, in a case where the uncrosslinked rubber composition of the present embodiment contains silica, the uncrosslinked rubber composition may further contain a silane coupling agent. Examples of the silane coupling agent include vinyltrichlorosilane, vinyltriethoxysilane, vinyltris(P-methoxy-ethoxy)silane, P-(3,4-epoxycyclohexyl)-ethyltrimethoxysilane, 3-chloropropyltrimethoxysilane, 3-chloropropyltriethoxysilane, 3-mercaptopropyltrimethoxysilane, 3-mercaptopropyltriethoxysilane, bis(3-(triethoxysilyl)propyl)tetrasulfide, bis(3-(triethoxysilyl)propyl)disulfide and the like. These may be used singly or two or more thereof may be used in combination.

In a case where the uncrosslinked rubber composition of the present embodiment contains a silane coupling agent, the content of the silane coupling agent can be changed as appropriate depending on the desired amount of silica blended, may be, for example, 0.1 parts by mass or more and is preferably 1 part by mass or more and more preferably 3 parts by mass or more with respect to 100 parts by mass of the rubber component. In addition, the content of the silane coupling agent may be, for example, 20 parts by mass or less and is preferably 15 parts by mass or less and more preferably 10 parts by mass or less with respect to 100 parts by mass of the rubber component. That is, the content of the silane coupling agent may be, for example, 0 to 20 parts by mass, 0 to 15 parts by mass, 0 to 10 parts by mass, 0.1 to 20 parts by mass, 0.1 to 15 parts by mass, 0.1 to 10 parts by mass, 1 to 20 parts by mass, 1 to 15 parts by mass, 1 to 10 parts by mass, 3 to 20 parts by mass, 3 to 15 parts by mass or 3 to 10 parts by mass with respect to 100 parts by mass of the rubber component.

As the filler, it is possible to use the powders of minerals such as clay and talc; carbonates such as magnesium carbonate and calcium carbonate; alumina hydrates such as aluminum hydroxide; and the like.

In a case where the uncrosslinked rubber composition of the present embodiment contains a filler, the content of the filler may be, for example, 0.1 parts by mass or more and is preferably 1 part by mass or more and more preferably 3 parts by mass or more with respect to 100 parts by mass of the rubber component. In addition, the content of the filler may be, for example, 20 parts by mass or less and is preferably 15 parts by mass or less and more preferably 10 parts by mass or less with respect to 100 parts by mass of the rubber component. That is, the content of the filler may be, for example, 0 to 20 parts by mass, 0 to 15 parts by mass, 0 to 10 parts by mass, 0.1 to 20 parts by mass, 0.1 to 15 parts by mass, 0.1 to 10 parts by mass, 1 to 20 parts by mass, 1 to 15 parts by mass, 1 to 10 parts by mass, 3 to 20 parts by mass, 3 to 15 parts by mass or 3 to 10 parts by mass with respect to 100 parts by mass of the rubber component.

As the rubber extender oil, it is possible to use aroma-based oil, naphthenic oil, paraffin-based oil and the like that have been conventionally used.

In a case where the uncrosslinked rubber composition of the present embodiment contains a rubber extender oil, the content of the rubber extender oil may be, for example, 1 part by mass or more and is preferably 20 parts by mass or more and more preferably 30 parts by mass or more with respect to 100 parts by mass of the rubber component. In addition, the content of the rubber extender oil may be, for example, 80 parts by mass or less and is preferably 60 parts by mass or less and more preferably 40 parts by mass or less with respect to 100 parts by mass of the rubber component. That is, the content of the rubber extender oil may be, for example, 0 to 80 parts by mass, 0 to 60 parts by mass, 0 to 40 parts by mass, 1 to 80 parts by mass, 1 to 60 parts by mass, 1 to 40 parts by mass, 20 to 80 parts by mass, 20 to 60 parts by mass, 20 to 40 parts by mass, 30 to 80 parts by mass, 30 to 60 parts by mass or 30 to 40 parts by mass with respect to 100 parts by mass of the rubber component.

Examples of the softeners include plant-based softeners such as tall oil, pine tar, rapeseed oil, cottonseed oil, peanut oil, castor oil, palm oil, and factice that mainly contain linoleic acid, oleic acid and abietic acid, paraffin-based oil, naphthenic oil, aromatic oil, phthalic acid derivatives such as dibutyl phthalate and the like.

In a case where the uncrosslinked rubber composition of the present embodiment contains a softener, the content of the softener may be, for example, 0.5 parts by mass or more and is preferably 1 part by mass or more and more preferably 3 parts by mass or more with respect to 100 parts by mass of the rubber component. In addition, the content of the softener may be, for example, 50 parts by mass or less and is preferably 20 parts by mass or less and more preferably 10 parts by mass or less with respect to 100 parts by mass of the rubber component. That is, the content of the softener may be, for example, 0 to 50 parts by mass, 0 to 20 parts by mass, 0 to 10 parts by mass, 0.5 to 50 parts by mass, 0.5 to 20 parts by mass, 0.5 to 10 parts by mass, 1 to 50 parts by mass, 1 to 20 parts by mass, 1 to 10 parts by mass, 3 to 50 parts by mass, 3 to 20 parts by mass or 3 to 10 parts by mass with respect to 100 parts by mass of the rubber component.

Examples of the vulcanization accelerators include thiuram-based accelerators such as tetramethylthiuram monosulfide, tetramethylthiuram disulfide and tetraethylthiuram disulfide; thiazole-based accelerators such as 2-mercaptobenzothiazole and dibenzothiazyl disulfide; sulfenamide-based accelerators such as N-cyclohexyl-2-benzothiazylsulfenamide and N-oxydiethylene-2-benzothiazolylsulfenamide; guanidine-based accelerators such as diphenylguanidine and diorthotolylguanidine; aldehyde-amine-based accelerators such as n-butyraldehyde-aniline condensation products and butyraldehyde-monobutylamine condensation products; aldehyde-ammonia-based accelerators such as hexamethylenetetramine; thiourea-based accelerators such as thiocarbanilide; and the like.

In a case where the uncrosslinked rubber composition of the present embodiment contains a vulcanization accelerator, the content of the vulcanization accelerator may be, for example, 0.1 parts by mass or more and is preferably 0.5 parts by mass or more and more preferably 1 part by mass or more with respect to 100 parts by mass of the rubber component. In addition, the content of the vulcanization accelerator may be, for example, 10 parts by mass or less and is preferably 8 parts by mass or less and more preferably 5 parts by mass or less with respect to 100 parts by mass of the rubber component. That is, the content of the vulcanization accelerator may be, for example, 0 to 10 parts by mass, 0 to 8 parts by mass, 0 to 5 parts by mass, 0.1 to 10 parts by mass, 0.1 to 8 parts by mass, 0.1 to 5 parts by mass, 0.5 to 10 parts by mass, 0.5 to 8 parts by mass, 0.5 to 5 parts by mass, 1 to 10 parts by mass, 1 to 8 parts by mass or 1 to 5 parts by mass with respect to 100 parts by mass of the rubber component.

Examples of the vulcanization aids include metal oxides such as zinc oxide (zinc white) and magnesium oxide; metal hydroxides such as calcium hydroxide; metal carbonates such as zinc carbonate and basic zinc carbonate; fatty acids such as stearic acid and oleic acid; aliphatic metal salts such as zinc stearate and magnesium stearate; amines such as di-n-butylamine and dicyclohexylamine; ethylene dimethacrylate, diallyl phthalate, N,N-m-phenylene dimaleimide, triallyl isocyanurate, trimethylolpropane trimethacrylate and the like.

In a case where the uncrosslinked rubber composition of the present embodiment contains a vulcanization aid, the content of the vulcanization aid may be, for example, 0.1 parts by mass or more and is preferably 0.5 parts by mass or more and more preferably 1 part by mass or more with respect to 100 parts by mass of the rubber component. In addition, the content of the vulcanization aid may be, for example, 10 parts by mass or less and is preferably 8 parts by mass or less and more preferably 5 parts by mass or less with respect to 100 parts by mass of the rubber component. That is, the content of the vulcanization aid may be, for example, 0 to 10 parts by mass, 0 to 8 parts by mass, 0 to 5 parts by mass, 0.1 to 10 parts by mass, 0.1 to 8 parts by mass, 0.1 to 5 parts by mass, 0.5 to 10 parts by mass, 0.5 to 8 parts by mass, 0.5 to 5 parts by mass, 1 to 10 parts by mass, 1 to 8 parts by mass or 1 to 5 parts by mass with respect to 100 parts by mass of the rubber component.

The uncrosslinked rubber composition of the present embodiment may further contain one or more of a variety of additives that are used in the rubber industry field, for example, an anti-aging agent, a vulcanization retarder, a peptizer, a process oil, a plasticizer and the like as necessary.

In a case where the uncrosslinked rubber composition of the present embodiment contains the additive, the content of the additive may be, for example, 0.1 parts by mass or more and is preferably 1 part by mass or more and more preferably 3 parts by mass or more with respect to 100 parts by mass of the rubber component. In addition, the content of the additive may be, for example, 20 parts by mass or less and is preferably 15 parts by mass or less and more preferably 10 parts by mass or less with respect to 100 parts by mass of the rubber component. That is, the content of the additive may be, for example, 0 to 20 parts by mass, 0 to 15 parts by mass, 0 to 10 parts by mass, 0.1 to 20 parts by mass, 0.1 to 15 parts by mass, 0.1 to 10 parts by mass, 1 to 20 parts by mass, 1 to 15 parts by mass, 1 to 10 parts, 3 to 20 parts by mass, 3 to 15 parts by mass or 3 to 10 parts by mass with respect to 100 parts by mass of the rubber component.

The uncrosslinked rubber composition of the present embodiment can be produced by applying a method that is ordinarily used as a method for producing an uncrosslinked rubber composition. For example, the uncrosslinked rubber composition of the present embodiment can be produced by mixing each of the above-described components using a kneader such as a Brabender, a Banbury mixer or a roll mixer.

### (Crosslinked rubber)

A crosslinked rubber of the present embodiment is a crosslinked body obtained by crosslinking the above-described uncrosslinked rubber composition. The crosslinked rubber of the present embodiment is excellent in terms of cut resistance and chipping resistance and is thus useful as, for example, a rubber material for a tire (particularly, a rubber material for a large tire) and useful particularly as thread rubber (particularly, thread rubber for a large tire).

The crosslinked rubber of the present embodiment can be produced by crosslinking the uncrosslinked rubber composition by the same method as a normal method for crosslinking rubber. For example, a crosslinked rubber molded into a desired shape can be obtained by heating and molding the uncrosslinked rubber composition.

The crosslinked rubber of the present embodiment can be preferably used in a variety of applications. The crosslinked rubber of the present embodiment can be preferably used for, for example, tires, adhesives, films, medical tape, paints, inks, asphalt binders, cloth, waterproofing agents, printer resins and the like and can be particularly preferably used in the tire application (particularly, a large tire application).

Hitherto, the preferable embodiment of the present invention has been described, but the present invention is not limited to the above-described embodiment.

### [Examples]

Hereinafter, the present invention will be described in more detail using examples, but the present invention is not limited to these examples.

### (Example 1-1)

### <Production of thermal polymer (A-1)>

Each raw material component shown in Table 1 was mixed in a mass ratio shown in Table 1 to obtain a mixed solution. Next, the obtained mixed solution was put into a thermal polymerization device (manufactured by Toyo Koatsu Inc.). Next, the mixed solution was heated up to 270°C under a condition of a heating rate of 5 °C/minute and maintained for 180 minutes. After that, the mixed solution was rapidly cooled with cooling water to obtain a thermally polymerized resin solution. Light content removal (distillation) was performed on the obtained thermally polymerized resin solution to remove an unreacted substance and a component having a low polymerization degree, thereby obtaining a polymer (thermal polymer (A-1)).

### <Production of thermal polymer (B-1)>

The thermal polymer (A-1) was put into a rotary evaporator (manufactured by AS ONE Corporation) installed on an oil bath having a temperature of 250°C, and addition polymerization was performed thereon for five hours, thereby obtaining a polymer (petroleum resin (B-1)).

### (Example 1-2)

### <Production of thermal polymer (B-2)>

The thermal polymer (A-1) was put into a rotary evaporator (manufactured by AS ONE Corporation) installed on an oil bath having a temperature of 250°C, and addition polymerization was performed thereon for 5.5 hours, thereby obtaining a polymer (petroleum resin (B-2)).

### (Comparative Example 1-1)

### <Production of petroleum resin (Y-1)>

Each raw material component shown in Table 1 was mixed in a mass ratio shown in Table 1 to obtain a mixed solution. Next, the obtained mixed solution was put into a thermal polymerization device (manufactured by Toyo Koatsu Inc.). Next, the mixed solution was heated up to 270°C under a condition of a heating rate of 5 °C/minute and maintained for 270 minutes. After that, the mixed solution was rapidly cooled with cooling water to obtain a thermally polymerized resin solution. Light content removal (distillation) was performed on the obtained thermally polymerized resin solution to remove an unreacted substance and a component having a low polymerization degree, thereby obtaining a polymer (petroleum resin (Y-1)).

### (Comparative Example 1-2)

### <Production of petroleum resin (Y-2)>

Each raw material component shown in Table 1 was mixed in a mass ratio shown in Table 1 to obtain a mixed solution. Next, the obtained mixed solution was put into a thermal polymerization device (manufactured by Toyo Koatsu Inc.). Next, the mixed solution was heated up to 270°C under a condition of a heating rate of 5 °C/minute and maintained for 310 minutes. After that, the mixed solution was rapidly cooled with cooling water to obtain a thermally polymerized resin solution. Light content removal (distillation) was performed on the obtained thermally polymerized resin solution to remove an unreacted substance and a component having a low polymerization degree, thereby obtaining a polymer (petroleum resin (Y-2)).

**[Table 1]**

| | | Example 1-1 | Comparative Example 1-1 | Comparative Example 1-2 |
|---|---|---|---|---|
| | | Thermal polymer (A-1) | Petroleum resin (Y-1) | Petroleum resin (Y-2) |
| DCPD | | 49 | 59 | 59 |
| C9 fraction | Aromatic olefin | 21 | 12 | 12 |
| | Compound other than aromatic olefin | 11 | 6 | 6 |
| Diluent | | 19 | 23 | 23 |

In Table 1, DCPD indicates dicyclopentadiene. In addition, as a diluent in Table 1, HI-SOL 100 (trade name, manufactured by ENEOS Corporation) containing a C9 aromatic compound as a main component was used.

Regarding the thermal polymers and the petroleum resins produced in Example 1-1, Example 1-2, Comparative Example 1-1 and Comparative Example 1-2, the softening points, the iodine values, the number-average molecular weights, the weight-average molecular weights and the molecular weight distributions were measured. The results are shown in Table 2 and Table 3.

**[Table 2]**

| | Thermal polymer (A-1) | Petroleum resin (B-1) | Petroleum resin (B-2) |
|---|---|---|---|
| Softening point (°C) | 140 | 160 | 168 |
| Iodine value | 158 | 159 | 159 |
| Mn | 608 | 689 | 701 |
| Mw | 1339 | 1835 | 1946 |
| Mw/Mn | 2.2 | 2.663 | 2.774 |

**[Table 3]**

| | Petroleum resin (Y-1) | Petroleum resin (Y-2) |
|---|---|---|
| Softening point (°C) | 158 | 173 |
| Iodine value | 184 | 190 |
| Mn | 659 | 702 |
| Mw | 1829 | 2136 |
| Mw/Mn | 2.78 | 3.00 |

### (Example 2-1)

### <Production of uncrosslinked rubber composition (C-1)>

Each of the following components was kneaded using a 250 mL kneader (LABO-PLASTOMILL manufactured by Toyo Seiki Seisaku-sho, Ltd.) to obtain a rubber composition.

The details of the performed kneading operation are as described below (i) to (iii).
(i) Mixer kneading: Rubber was put into a sealed pressurized kneader heated to 130°C and masticated at 30 rpm for one minute, then, half of a mixture of carbon black, zinc oxide, stearic acid and an anti-aging agent and the total amount of the petroleum resin (B-1) were put thereinto, and the components were kneaded at an increased rotation speed of 50 rpm for one minute and 30 seconds. Furthermore, the remaining half of the mixture of carbon black, zinc oxide, stearic acid and the anti-aging agent was added thereto, the components were further kneaded for one minute and 30 seconds, then, a ram (floating weight) was lifted to put the powder of the mixture of carbon black, zinc oxide, stearic acid and the anti-aging agent attached to the circumference into a kneaded product using a brush, the components were further kneaded for one minute, then, the ram (floating weight) was lifted again to put the powder of the mixture of carbon black, zinc oxide, stearic acid and the anti-aging agent attached to the circumference into a kneaded product using the brush, and the components were further kneaded for three minutes and discharged.
(ii) Re-milling: In order to make a filler dispersed more favorably, the kneaded product obtained in the (i) that had been cooled to a sufficiently low temperature after being discharged was further kneaded at 50 rpm for two minutes with the sealed pressurized kneader heated to 120°C and then discharged.
(iii) Roll kneading (addition of vulcanization system): After the kneaded product was discharged and cooled to a sufficiently low temperature, sulfur, a vulcanization accelerator and the like were added to and kneaded with the kneaded product with two rolls to obtain a rubber composition.
   · Rubber (natural rubber, RSS#3): 100 parts by mass
   · Carbon black (manufactured by Toka Carbon Co., Ltd., trade name: SEAST 7HM): 60 parts by mass
   · Zinc oxide No. 3 (manufactured by Toho Zinc Co., Ltd., trade name: GINREI R): 3 parts by mass
   · Stearic acid (manufactured by New Japan Chemical Co., Ltd., trade name: STEARIC ACID 300): 1 part by mass
   · Anti-aging agent (manufactured by Ouchi Shinko Chemical Industrial Co., Ltd., trade name: NOCRAC 6C): 1 part by mass
   · Petroleum resin (B-1): 5 parts by mass
   · Sulfur (manufactured by Hosoi Chemical Industry Co., Ltd., 5% oil-treated sulfur): 2 parts by mass
   . Vulcanization accelerator (manufactured by Ouchi Shinko Chemical Industrial Co., Ltd., trade name: NOCCELER CZ): 1 part by mass

### <Production of crosslinked rubber>

The obtained uncrosslinked rubber composition (C-1) was put into a mold (150 mm × 150 mm × 1 mm) and heated and pressurized at 150°C for 10 minutes, thereby obtaining a crosslinked rubber sheet having a thickness of 1 mm.

### (Example 2-2)

### <Production of uncrosslinked rubber composition (C-2)>

An uncrosslinked rubber composition (C-2) was obtained in the same manner as in the <production of uncrosslinked rubber composition (C-1)> of Example 2-1 except that the petroleum resin (B-2) was used instead of the petroleum resin (B-1).

### <Production of crosslinked rubber>

A crosslinked rubber sheet was produced in the same manner as in Example 2-1 except that the uncrosslinked rubber composition (C-2) was used instead of the uncrosslinked rubber composition (C-1).

### (Comparative Example 2-1)

### <Production of uncrosslinked rubber composition (Z-1)>

An uncrosslinked rubber composition (Z-1) was obtained in the same manner as in the <production of uncrosslinked rubber composition (C-1)> of Example 2-1 except that the thermal polymer (A-1) was used instead of the petroleum resin (B-1).

### <Production of crosslinked rubber>

A crosslinked rubber sheet was produced in the same manner as in Example 2-1 except that the uncrosslinked rubber composition (Z-1) was used instead of the uncrosslinked rubber composition (C-1).

### (Comparative Example 2-2)

### <Production of uncrosslinked rubber composition (Z-2)>

An uncrosslinked rubber composition (Z-2) was obtained in the same manner as in the <production of uncrosslinked rubber composition (C-1)> of Example 2-1 except that an extension oil (TDAE) was used instead of the petroleum resin (B-1).

### <Production of crosslinked rubber>

A crosslinked rubber sheet was produced in the same manner as in Example 2-1 except that the uncrosslinked rubber composition (Z-2) was used instead of the uncrosslinked rubber composition (C-1).

### (Comparative Example 2-3)

### <Production of uncrosslinked rubber composition (Z-3)>

An uncrosslinked rubber composition (Z-3) was obtained in the same manner as in the <production of uncrosslinked rubber composition (C-1)> of Example 2-1 except that the petroleum resin (B-1) was not blended.

### <Production of crosslinked rubber>

A crosslinked rubber sheet was produced in the same manner as in Example 2-1 except that the uncrosslinked rubber composition (Z-3) was used instead of the uncrosslinked rubber composition (C-1).

Regarding the crosslinked rubber sheets obtained in Example 2-1, Example 2-2, Comparative Example 2-1, Comparative Example 2-2 and Comparative Example 2-3, tear tests were performed by the following method to obtain tear strengths. The results are shown in Table 4.

### (Tear test)

A test piece (notch-free angle type) was blanked from the fabricated crosslinked rubber sheet with a blanking die. Next, a tear test was performed using the blanked sample at a tensile rate of 500 mm/min based on JIS K 6252: 2007. The results are shown in Table 4.

**[Table 4]**

| | Example 2-1 | Example 2-2 | Comparative Example 2-1 | Comparative Example 2-2 | Comparative Example 2-3 |
|---|---|---|---|---|---|
| Tear strength (N/cm) | 1455 | 1564 | 1049 | 730 | 737 |

### (Reference Example 1)

### <Production of uncrosslinked rubber composition (R-1)>

Each of the following components was kneaded using a 250 mL kneader (LABO-PLASTOMILL manufactured by Toyo Seiki Seisaku-sho, Ltd.) to obtain a rubber composition.

The details of the performed kneading operation are as described below (i) to (iii).
(i) Mixer kneading: Rubber was put into a sealed pressurized kneader heated to 135°C and masticated at 30 rpm for one minute, then, half of a mixture of silica, zinc oxide, stearic acid and an anti-aging agent, a silane coupling agent and the total amount of the petroleum resin (B-1) were put thereinto, and the components were kneaded at an increased rotation speed of 50 rpm for one minute and 30 seconds. Furthermore, the remaining half of the mixture of silica, zinc oxide, stearic acid and the anti-aging agent was added thereto, the components were further kneaded for one minute and 30 seconds, then, a ram (floating weight) was lifted to put the powder of the mixture of silica, zinc oxide, stearic acid and the anti-aging agent attached to the circumference into a kneaded product using a brush, the components were further kneaded for one minute, then, the ram (floating weight) was lifted again to put the powder of the mixture of silica, zinc oxide, stearic acid and the anti-aging agent attached to the circumference into a kneaded product using the brush, and the components were further kneaded for three minutes and discharged.
(ii) Re-milling: In order to make a filler dispersed more favorably, the kneaded product obtained in the (i) that had been cooled to a sufficiently low temperature after being discharged was further kneaded at 50 rpm for two minutes with the sealed pressurized kneader heated to 120°C and then discharged.
(iii) Roll kneading (addition of vulcanization system): After the kneaded product was discharged and cooled to a sufficiently low temperature, sulfur, a vulcanization accelerator and the like were added to and kneaded with the kneaded product with two rolls to obtain a rubber composition.
   · Rubber (SBR, 1502): 100 parts by mass
   . Silica (manufactured by Tosoh Corporation, trade name: NIPSIL AQ): 40 parts by mass
   · Zinc oxide No. 3 (manufactured by Toho Zinc Co., Ltd., trade name: GINREI R): 3 parts by mass
   · Stearic acid (manufactured by New Japan Chemical Co., Ltd., trade name: STEARIC ACID 300): 1 part by mass
   · Anti-aging agent (manufactured by Ouchi Shinko Chemical Industrial Co., Ltd., trade name: NOCRAC 6C): 1 part by mass
   · Petroleum resin (B-1): 5 parts by mass
   · Silane coupling agent (manufactured by Osaka Soda Co., Ltd., trade name: CABRUS 4): 3.2 parts by mass
   · Sulfur (manufactured by Hosoi Chemical Industry Co., Ltd., 5% oil-treated sulfur): 2 parts by mass
   · Vulcanization accelerator (manufactured by Ouchi Shinko Chemical Industrial Co., Ltd., trade name: NOCCELER CZ): 1.5 part by mass
   · Vulcanization accelerator (manufactured by Ouchi Shinko Chemical Industrial Co., Ltd., trade name: NOCCELER D): 1.5 part by mass

### <Production of crosslinked rubber>

The obtained uncrosslinked rubber composition (R-1) was put into a mold (150 mm × 150 mm × 1 mm) and heated and pressurized at 160°C for 15 minutes, thereby obtaining a crosslinked rubber sheet having a thickness of 1 mm.

### (Reference Example 2)

### <Production of uncrosslinked rubber composition (R-2)>

An uncrosslinked rubber composition (R-2) was obtained in the same manner as in the <production of uncrosslinked rubber composition (R-1)> of Reference Example 1 except that the petroleum resin (B-2) was used instead of the petroleum resin (B-1).

### <Production of crosslinked rubber>

A crosslinked rubber sheet was produced in the same manner as in Reference Example 1 except that the uncrosslinked rubber composition (R-2) was used instead of the uncrosslinked rubber composition (R-1).

### (Reference Example 3)

### <Production of uncrosslinked rubber composition (R-3)>

An uncrosslinked rubber composition (R-3) was obtained in the same manner as in the <production of uncrosslinked rubber composition (R-1)> of Reference Example 1 except that the thermal polymer (A-1) was used instead of the petroleum resin (B-1).

### <Production of crosslinked rubber>

A crosslinked rubber sheet was produced in the same manner as in Reference Example 1 except that the uncrosslinked rubber composition (R-3) was used instead of the uncrosslinked rubber composition (R-1).

### (Reference Example 4)

### <Production of uncrosslinked rubber composition (R-4)>

An uncrosslinked rubber composition (R-4) was obtained in the same manner as in the <production of uncrosslinked rubber composition (R-1)> of Reference Example 1 except that an extension oil (TDAE) was used instead of the petroleum resin (B-1).

### <Production of crosslinked rubber>

A crosslinked rubber sheet was produced in the same manner as in Reference Example 1 except that the uncrosslinked rubber composition (R-4) was used instead of the uncrosslinked rubber composition (R-1).

### (Reference Example 5)

### <Production of uncrosslinked rubber composition (R-5)>

An uncrosslinked rubber composition (R-5) was obtained in the same manner as in the <production of uncrosslinked rubber composition (R-1)> of Reference Example 1 except that the petroleum resin (B-1) was not blended.

### <Production of crosslinked rubber>

A crosslinked rubber sheet was produced in the same manner as in Reference Example 1 except that the uncrosslinked rubber composition (R-5) was used instead of the uncrosslinked rubber composition (C-1).

Regarding the crosslinked rubber sheets obtained in Reference Examples 1 to 5, tear tests were performed by the above-described method to obtain tear strengths. The results are shown in Table 5.

**[Table 5]**

| | Reference Example 1 | Reference Example 2 | Reference Example 3 | Reference Example 4 | Reference Example 5 |
|---|---|---|---|---|---|
| Tear strength (N/cm) | 610 | 603 | 571 | 600 | 629 |

## Claims

1. A petroleum resin that is a polymer of a raw material component including a C9 fraction containing an aromatic olefin and dicyclopentadiene,
wherein a ratio C₂/C₁ (mass ratio) of a content C₂ of the aromatic olefin to a content C₁ of the dicyclopentadiene in the raw material component is 0.35 or more and 0.5 or less, and
a softening point is 150°C or higher.

2. An additive for rubber comprising:
the petroleum resin according to Claim 1.

3. The additive for rubber according to Claim 2 that is an additive for isoprene-based rubber.

4. The additive for rubber according to Claim 3 that is an additive for natural rubber.

5. An uncrosslinked rubber composition comprising:
a rubber component containing isoprene-based rubber;
a crosslinking agent for rubber; and
the petroleum resin according to Claim 1.

6. A crosslinked rubber that is formed by crosslinking the uncrosslinked rubber composition according to Claim 5.

7. A method for producing a petroleum resin comprising:
a first step of thermally polymerizing a raw material component including a C9 fraction containing an aromatic olefin and dicyclopentadiene to obtain a thermal polymer having a lower softening point than the petroleum resin; and
a second step of heating the thermal polymer to obtain a petroleum resin,
wherein a ratio C₂/C₁ (mass ratio) of a content C₂ of the aromatic olefin to a content C₁ of the dicyclopentadiene in the raw material component is 0.35 or more and 0.5 or less, and
a softening point of the petroleum resin is 150°C or higher.

8. An additive for thread rubber comprising:
a petroleum resin,
wherein the petroleum resin is a thermal polymer of a raw material component including a C9 fraction containing an aromatic olefin and dicyclopentadiene, and
a softening point of the petroleum resin is 150°C or higher.

9. The additive for thread rubber according to Claim 8 that is an additive for thread rubber for a large tire.

10. An uncrosslinked rubber composition for forming thread rubber comprising:
a rubber component containing isoprene-based rubber;
a crosslinking agent for rubber; and
the additive for thread rubber according to Claim 8 or 9.

11. A thread rubber that is formed by crosslinking the uncrosslinked rubber composition for a thread according to Claim 10.
